# EUROPEAN PATENT SPECIFICATION

(11) **EP 3 453 729 B1**
(45) Date of publication and mention of the grant of the patent: **24.08.2022**
(21) Application number: 18382478.8
(22) Date of filing: 27.06.2018
(51) Int. Cl.: C08G 18/73, C08G 18/36, C09J 175/06

(54) **ADHESIVES DERIVED FROM CASTOR OIL**
KLEBSTOFFDERIVATE VON RIZINUSÖL
ADHÉSIFS DÉRIVÉS D'HUILE DE RICIN

(30) Priority: 07.09.2017 EP 17382599
(43) Date of publication of application: 13.03.2019
(73) Proprietor: Procter & Gamble International Operations SA, 1213 Geneva (CH)
(72) Inventor: FERNANDEZ PRIETO, Susana, 1853 Strombeek-Bever (BE); FRANCO, José María, 21071 Huelva (ES); MARTINEZ GARCIA, Inmaculada, 21071 Huelva (ES); RAGHUNANAN, Latchmi Cindy, 21071 Huelva (ES); FRANKENBACH, Gayle Marie, Cincinnati, Ohio 45202 (US)
(74) Representative: P&G Patent Belgium UK

(56) References cited:
- US-A- 3 246 049
- US-A1- 2002 148 181

## Description

### FIELD OF THE INVENTION

Cross-linked castor oil based adhesives with improved adhesion profile.

### BACKGROUND OF THE INVENTION

Adhesives have been used for various applications since time immemorial. New and alternative uses of adhesives are still being thought of, that require different adhesion profiles of the adhesive. An example is the ability to adhere well to certain surfaces, and less well to others. Another desired characteristic for certain applications, such as for some packaging fabric and home care articles, is the ability to provide good adherence between two surfaces, but also to leave little or no residue on at least one surface when the two surfaces are separated. Polyurethane adhesives made of cross-linked castor oil with isocyanates are known in the wood industry, for packaging and for moulds. For instance, such adhesives are disclosed in US 2009/0266482 and US 3,335,311. Such adhesives are especially advantageous since they are at least partially derived from sustainable feedstock. Hence, a need remains for castor oil derived adhesives which provide improved adherence to some surfaces but not others, and/or do not leave a residue on at least one of the surfaces after the glued surfaces have been separated.

It is also desired to quickly remove pet hair and fluff from fabrics, such as clothes, sofas or curtains. An example of such technology are brushes based on electrostatic forces or rollers with adhesives. However, such means are not always efficient at removing such pet hair, surface dirt, fluff and the like, and can damage the fabrics by leaving adhesive residues and because of strong adhesion to the fabric fibres resulting in damaged fibres. Therefore, there is still a need for an improved means of removing pet hair, surface dirt, fluff, and the like, from fabrics.

US3,246,049 relates to pressure sensitive adhesives comprising an isocyanate cross-linked polyester of castor oil and diglycolic acid, and tapes coated with the adhesive. JP2014004799A seeks to provide a laminate having excellent lamination strength and heat seal strength and capable of maintaining adhesiveness even when subjected to boiling or a retort process, through the use of a laminate which comprises a first plastic substrate, a print layer comprising an ink composition, an adhesive layer comprising an adhesive, and a second plastic substrate, wherein the ink composition contains a colorant, a polyurethane urea resin made from castor oil polyol, and a medium, and the adhesive contains one of a polyurethane resin, a polyurethane urea resin, a polyamide resin and a polyester resin, all made from castor oil polyol. US2002/0148181 A1 discloses solid polyurethane foams for use as a component in composite structural members, and processes for making them.

### SUMMARY OF THE INVENTION

The present invention relates to a method of treating fabrics comprising the steps of:
(a) contacting the surface of the fabric with a chemically cross-linked adhesive composition, wherein the adhesive composition comprises castor oil, cross-linked using at least one isocyanate cross-linking agent, wherein the weight ratio of castor oil to the cross-linking agent is from 78 : 22 to 90 : 10.
(b) removing the adhesive composition from the surface of the textile.

### DETAILED DESCRIPTION OF THE INVENTION

Adhesives formed by chemically cross-linking a polyester polyol, or a derivative thereof, using at least one isocyanate cross-linking agent, at a weight ratio of castor oil to cross-linking agent of from 78 : 22 to 90 : 10 results in an adhesive composition which is at least partially naturally derived, and which provides improved adherence to some surfaces but not others, and does not leave a residue on at least one of the surfaces after the glued surfaces have been separated. Such adhesives are also able to quickly remove pet hair and fluff from fabrics, such as clothes, sofas or curtains, without leaving adhesive residue or damaging the fabric fibres.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

All measurements are performed at 25°C unless otherwise specified.

### Adhesives composition

The adhesive compositions are formed using a cross-linking agent which forms covalent bonds which are stable mechanically and thermally, so once formed, they are difficult to break.

The chemically cross-linked adhesive composition, comprises polyester polyols or a derivative thereof, cross-linked with an isocyanate cross-linking agent (such as HDMI) in a weight ratio weight ratio of castor oil to isocyanate cross-linking agent of from 78 : 22 to 90 : 10, preferably from 80 : 20 to 88 : 12, with 84:16 being particularly preferred. Such ratios of castor oil to cross-linking agent have been found to provide the adhesive with a more selective adhesion to surface materials to be bonded and also less residue on at least one of the surfaces, after the surfaces have been peeled apart. The narrower ranges provide an improved adhesion profile while further reducing residues.

Polyester polyols are hydroxyl-containing esters. Suitable polyester polyols can be selected from the group consisting of: aliphatic polyester polyols, aromatic polyester polyols, organic oil based polyester polyols, and mixtures thereof. Organic oil based polyester polyols are preferred. Preferred organic oils are vegetable oils since they typically comprise high levels of unsaturation (C=C bonds) and naturally comprise hydroxyl groups. Suitable polyester polyols include: hexanoic acid, 4-hydroxy-, 1,1',1"-(1,2,3-propanetriyl) ester; pentanoic acid, 5-amino-4-hydroxy-, 1,1',1"-(1,2,3-propanetriyl) ester; Polycaprolactone triol; castor oil, hydroxyl sunflower oil (HSO) and mixtures thereof. Castor oil; hydroxyl sunflower oil (HSO) and mixtures thereof are preferred. Castor oil is highly preferred.

Castor oil (ricinus oil) is a pale yellow and viscous liquid, derived from the bean of the castor plant (ricinus communis). Castor oil is predominately made up of triglycerides of fatty acids that contain 87-90% of ricinoleic acid (cis-12-hydroxyoctadec-9-enoic acid), and can be achieved in high purity grades. Castor oil and its derivatives have been used as polyols for polyurethanes and adhesives. The castor oil can be partially hydrogenated. It has been found that castor oil provides the length of the branches and the position of the hydroxyl groups which is particularly suited for providing an adhesive composition having the desired adhesion profile, with low residues remaining on at least one surface after peeling the adhered surfaces apart.

Suitable cross-linking agents can be linear, branched, or cyclic isocyanates, and mixtures thereof. Suitable cross-linking agents can be selected from the group consisting of: 1, 4-butane diisocyanate (BDI), 1,6-hexamethylene diisocyanate (HMDI), L-Lysine ethyl ester diisocyanate (LDI), 4,4'-Methylenebis(cyclohexyl isocyanate) (H12MDI), Glycolide-ethylene glycol-glycolide isocyanate (Bezwada, LLC), 4,4'-Methylenebis(phenyl isocyanate) (MDI), 2,4'-Methylenebis(phenyl isocyanate) (MDI), 2,2'-Methylenebis(phenyl isocyanate) (MDI), Isophorone diisocyanate (IPDI), 2,4-toluene diisocyanate (2,4-TDI), 2,6-toluene diisocyanate (2,6-TDI), Poly(hexamethylene diisocyanate) (PDI), 1,3-bis(2-isocyanatopropan-2-yl)benzene, Poly(pentamethylene diisocyanate) and mixtures thereof, preferably 1,6-hexamethylene diisocyanate (HMDI), L-Lysine ethyl ester diisocyanate (LDI), Poly(pentamethylene diisocyanate), Poly(hexamethylene diisocyanate) (PDI), 1,3,5-tris(5-isocyanatopentyl)-1,3,5-triazine-2,4,6(1H,3H,5H)-trione, and mixtures thereof. 1,6 hexamethylene diisocyanate (HMDI) is particularly preferred due to the adhesion profile of the resultant adhesive composition. Such cross-linking agents are available from Sigma-Aldrich and from Covestro under trade name of Desmodur^{®} such as eco N 7300. The cross-linking agent can have a viscosity below 2,500 mPa.s at 25 °C and an isocyanate equivalent weight of from 15% to 40%, preferably from 18% to 30%. Such cross linking agents are more easily blended with the castor oil to provide a more uniform adhesive composition.

Surprisingly, despite HMDI has two saturated rings versus PDI that only has one and therefore a more compacted network would be expected, adhesives containing HMDI as cross-linker show lower oil residues.

The adhesive composition may comprise less than 0.5% wt, preferably less than 0.4% wt, even more preferably less than 0.3% wt of urea based on total adhesive composition weight. It is believed that cross-linking density decreases with urea formation increasing adhesiveness but reducing working time.

The adhesive composition can have an oil migration of less than 2%, preferably less than 1%, even more preferably less than 0.8% according to oil migration method. It is believed that oil migration will reduce adhesiveness over time.

The adhesive composition is characterized by having less than 2.5 mg solid residues, preferably less than 2.0 mg, even more preferably less than 1.5 mg, according to solid residues method. Without being bound by theory, lower amounts of solid residues will allow for easier peeling without breakage of the adhesive.

The adhesive compositions of the present invention are particularly useful for fabric applications since they cause less damage to fabrics and leave less residue. Residues are further reduced where 1,6-hexamethylene diisocyanate (HMDI) is used as the cross-linking agent.

The adhesive compositions of the present invention is used in methods of treating fabrics comprising the steps of: Contacting the surface of the fabric with the adhesive composition; and removing the adhesive composition from the surface of the textile. In such methods, the adhesive can be an outer layer of an article, wherein the article comprises a substrate such as a fabric, nonwoven, paper or plastic layer. The article can be any suitable form, such as a sheet, or a glove, or part of a roller, whereby the adhesive is the outer layer of the roll which contacts the fabric. Such methods can be used for the removal of hair, dirt and fluff from fabric surfaces. For such applications, the adhesive composition can be a chemically cross-linked adhesive composition, wherein the adhesive composition comprises or even consists of castor oil or a derivative thereof, cross-linked using 1,6-hexamethylene diisocyanate (HMDI) in a weight ratio weight ratio castor oil : HMDI from 78 : 22 to 90 : 10.

### Process of making

The polyester polyol, such as castor oil or derivative thereof, is mixed with the isocyanate cross-linking agent, such as HMDI, under controlled temperature and environmental humidity. Then, during the working time of the adhesive composition, adhesive is shaped or applied into a surface according to the final desired application.

On the one hand, cross-linking of the polyester polyol may occur from 5 °C to 85 °C, preferably from 15 °C to 40 °C. Without being bound by theory, the higher the temperature the faster the cross-linking reaction happens, however, this also reduces the working time of the adhesive requiring fast application.

On the other hand, cross-linking of castor oil and HMDI may happen in absence or presence of environmental humidity. Preferably, castor oil and HMDI are combined at a humidity below 90%, preferably below 50%, even more preferably below 15%. It is believed that the higher the humidity, the higher the urea formation will be and this will decrease the working time of the adhesive.

For improved biodegradability and sustainability, the process of making the adhesive composition is preferably free of any further cross-linking agent. That is, no cross-linking agent is used to promote the cross-linking of the polyester polyol beyond the isocyanate cross-linking agent.

The cross-linking reaction is preferably done without solvent being present, as residual solvent remaining in the adhesive composition reduces the environmental sustainability of the adhesive, and can lead to surface discoloration of surfaces to which the adhesive is applied.

### METHODS

### 1. Curing time and total urea content

Fourier Transform Infra-Red (FTIR) measurements are performed using a infrared spectrometer equipped with an attenuated total reflectance (ATR) system (such as Dilab FTS3500ARX (Varian)). Cured films are placed on the ATR crystal area and the spectra recorded transmission mode over a scanning range of 4000-400 cm⁻¹ for 64 repeated scans at a resolution of 4 cm⁻¹. All spectra are transformed into the absorbance mode using the program software, baseline corrected and normalized to the CH₂ peak area.

Curing time is taken as the time for complete reaction of all available isocyanate (NCO) groups, as determined by the disappearance of the NCO peak at 2266 cm⁻¹ in the FTIR spectra.

Total urea content is determined following deconvolution (using Originpro version 9) of the carbonyl peaks between 1500-1800 cm⁻¹ to determine the associated peak areas. For each formulation, the resulting urea contents are taken relative to the ester content of castor oil. The urea peaks of interest are as follows: 1761 cm⁻¹ (free C=O, ester), 1743 cm⁻¹ (H-bonded C=O, ester), 1640 cm⁻¹ (free C=O, urea) and 1620 cm⁻¹ (H-bonded C=O, urea).

### 2. Working time

The working time is determined qualitatively as the number of hours that the adhesive can still be manipulated and applied into a surface or mould in a shape when cured at the specified curing conditions.

### 3. Adhesiveness

Adhesiveness is measured as the mass of material retained by the adhesive upon contact with a mixture of solid particles under controlled conditions. The adhesives are cured on the heads of disposable aluminum plate geometries (Thermo Haake, Germany). Measurements are performed on a controlled-stress rheometer (such as MARS from Thermo Haake, Germany) in axial (tacking/tensile) mode. The probe-containing adhesive (1-2 mm thick, 20 mm diameter) is loaded onto a bottom plate containing a uniform layer of particulate mixture at a speed of 1 mm/s until a fixed force of 10 N is reached. This gap is held for 60 s, following which the probe head is immediately lifted above the particulate mixture. The mass of material picked up by the adhesive under these conditions is determined by the difference in mass method. The particulate composition is as follows: ethyl cellulose (1.5 g), gelatine from porcine skin (gel strength 90-110 g bloom, type A; 1.5 g), pectin from citrus peel (galacturonic acid ≥ 44% dried basis; 1.5 g), sucrose (≥ 95.5% purity; 1.5 g) and sodium chloride (lab grade, 1.5 g). Note that activated charcoal is also added to color the mixture for improved visibility on the adhesive surface, but these are large and few enough in pieces to be selectively removed from the particulate prior to use.

### 4. Strength

Adhesive strength is the deformation strength (G^{∗}) obtained inside the linear viscoelastic range (LVR) of Small Amplitude Oscillatory Shear (SAOS) rheology experiments. Samples (2-3 mm thick, 20 mm diameter) are cured on disposable aluminum plate geometries (Thermo Haake, Germany) and measured on a controlled-stress rheometer (such as MARS II from Thermo Haake, Germany). The LVR is determined from stress sweep experiments using the parallel plate-plate geometry (20 mm disposable aluminum) and performed between 0.01-1000 Pa at 25 °C and a fixed frequency of 1Hz.

### 5. Oil migration

Oil migration is measured via the percentage area containing visible (to the naked eye) oil spots when a 2mm thick disk of 35mm diameter of the respectively cured adhesive is placed on a smooth oil absorbent surface (e.g. paper) and left undisturbed for a period of 1 week. Oil migration is representing the amount of oil residues that an adhesive would leave on a fabric.

### 6. Solid Residues

The solid residues left behind following adhesive use (broken adhesive) is simulated by a rotational shear time sweep experiment on a controlled-stress rheometer (such as a MARS II from Thermo Haake, Germany). The sample, cured on the head of a disposable aluminum plate geometry (2-3 mm thick, 20 mm diameter), is subjected to a 5N force and sheared at a rate of 50 s⁻¹ for 2s against a rough stainless steel bottom plate (20 mm diameter serrated plate).

### EXAMPLES

The adhesive composition of the present invention is prepared as follows: 84 grams castor oil (94481, Guinama, Spain) and 16 grams HMDI (Sigma-Aldrich) are mixed in a beaker with a magnetic stirrer for 20 minutes at 28 °C, the mixture is applied on the required surface or poured into a shape and cured at 37°C at 3 different environment humidity: 11%, 54% and 88%.

| Example | 1 | 2 | 3 |
|---|---|---|---|
| Castor oil : isocyanate wt ratio | 84:16 | | |
| Humidity (% rH) | 11 | 54 | 88 |
| Curing time (days) | 2 | 2 | 1 |
| Urea content (%) | - | 0.21 | 0.23 |
| Working time (hrs) | 25 | 19 | 19 |
| Oil migration (%) | 0 | 0 | 0 |
| Solid residues (mg) | 1.3 ± 0.3 | 0.5 ± 0.3 | 0.3 ± 0.3 |

The following polyurethane adhesives was prepared using the procedure as follows: Castor oil and the corresponding isocyanate were mixed in a beaker with a magnetic stirrer for 20 minutes, the mixture was then applied on the required surface or poured into a mould having the desired shape, and cured at 37°C at 3 different environment humidity: 11%, 54% and 88%. The characteristics of the resultant adhesives is also given below:

| Example | A^{∗} | B^{∗} | 4 | 5 | C^{∗} | D^{∗} | E^{∗} | F^{∗} | G^{∗} | H^{∗} |
|---|---|---|---|---|---|---|---|---|---|---|
| Castor oil (g) | 84 | 84 | 84 | 84 | 75 | 75 | 75 | 68 | 68 | 68 |
| HMDI (g)¹ | - | - | 16 | 16 | 25 | 25 | 25 | 32 | 32 | 32 |
| PDI (g)² | 16 | 16 | - | - | - | - | - | - | - | - |
| Reaction temp. (°C) | 28 | 28 | 28 | 28 | 28 | 28 | 28 | 28 | 28 | 28 |
| Humidity (% rH) | 11 | 88 | 11 | 88 | 11 | 54 | 88 | 11 | 54 | 88 |
| Curing temperature (°C) | 37 | 37 | 37 | 37 | 37 | 37 | 37 | 37 | 37 | 37 |
| Curing time (days) | 2 | 2 | 2 | 1 | > 7³ | 4 | 3 | 7 | 5 | 3 |
| Urethane content (%) | 2.11 | 1.93 | 1.96 | 1.97 | NA | 2.68 | 2.62 | 2.59 | 2.52 | 2.58 |
| Urea content (%) | 0.05 | 0.25 | - | 0.23 | NA | 0.64 | 0.64 | 0.75 | 1.01 | 1.00 |
| Adhesive characteristics: | | | | | | | | | | |
| Working time (hrs) | <12 | <12 | 25 | 19 | <12 | <12 | <12 | 48 | 25 | <12 |
| Adhesiveness (mg) | 55 | 38 | 32 | 37 | NA⁺ | 3.5 | 3.4 | 3 | 0.6 | 2.5 |
| Strength (kPa) | 7 | 4 | 15 | 23 | NA⁺ | NA⁺ | NA⁺ | NA⁺ | NA⁺ | NA⁺ |
| Oil residues (%) | 30 | 50 | 0 | 0 | NA⁺ | NA⁺ | NA⁺ | NA⁺ | NA⁺ | NA⁺ |
| Solid residues (mg) | 12 | 9.5 | 1.3 | 0.3 | NA⁺ | NA⁺ | NA⁺ | NA⁺ | NA⁺ | NA⁺ |

| | | | | | | | | | | |
|---|---|---|---|---|---|---|---|---|---|---|
| ^{∗} Comparative ⁺ Not applicable, since curing time was too long and no further measurements were done. ¹ HDMI - 1,6-hexamethylene diisocyanate ² PDI - Poly (hexamethylene diisocyanate) ³ Not cured | | | | | | | | | | |

The adhesive compositions of the present invention can be easily made without requiring additional cross-linking agent or solvents. In addition, as can be seen from the results above, the adhesives of the present invention have a working time which is from 19 to 25 hours and hence sufficient to allow the adhesive to be processed into the desired form, and applied while not being impractically long. The resultant adhesives also leave no oil residues and very little solid residues, for instance on fabrics.

## Claims

1. A method of treating fabrics comprising the steps of:
(a) contacting the surface of the fabric with a chemically cross-linked adhesive composition, wherein the adhesive composition comprises castor oil, cross-linked using at least one isocyanate cross-linking agent, wherein the weight ratio of castor oil to the cross-linking agent is from 78 : 22 to 90 : 10;
(b) removing the adhesive composition from the surface of the textile.

2. The method of treating fabrics according to claim 1, wherein the weight ratio of castor oil to the cross-linking agent is from 80 : 20 to 88 : 12.

3. The method of treating fabrics according to any preceding claim, wherein the cross-linking agent is selected from the group consisting of: 1, 4-butane diisocyanate (BDI), 1,6-hexamethylene diisocyanate (HMDI), L-Lysine ethyl ester diisocyanate (LDI), 4,4'-Methylenebis(cyclohexyl isocyanate) (H12MDI), Glycolide-ethylene glycol-glycolide isocyanate (Bezwada, LLC), 4,4'-Methylenebis(phenyl isocyanate) (MDI), 2,4'-Methylenebis(phenyl isocyanate) (MDI), 2,2'-Methylenebis(phenyl isocyanate) (MDI), Isophorone diisocyanate (IPDI), 2,4-toluene diisocyanate (2,4-TDI), 2,6-toluene diisocyanate (2,6-TDI), Poly(hexamethylene diisocyanate) (PDI), 1,3-bis(2-isocyanatopropan-2-yl)benzene, Poly(pentamethylene diisocyanate) and mixtures thereof, preferably 1,6-hexamethylene diisocyanate (HMDI), L-Lysine ethyl ester diisocyanate (LDI), Poly(pentamethylene diisocyanate), Poly(hexamethylene diisocyanate) (PDI), 1, 3,5-tris(5-isocyanatopentyl)-1,3,5-triazine-2,4,6(1H,3H,5H)-trione, and mixtures thereof, more preferably 1,6-hexamethylene diisocyanate (HMDI).

4. The method of treating fabrics according to any preceding claims, wherein the adhesive composition has less than 0.5% wt, preferably less than 0.4% wt, even more preferably below 0.3% wt of urea based on total adhesive composition weight.

5. The method of treating fabrics according to any preceding claims, wherein the adhesive composition has an oil migration of less than 2% according to oil migration method described herein.

6. The method of treating fabrics according to any preceding claims, wherein the adhesive composition has less than 2.5 mg solid residues, preferably less than 2.0 mg, even more preferably less than 1.5 mg, according to solid residues method described herein.

7. The method of treating fabrics according to any preceding claims, wherein the adhesive composition has at least 10 hours, preferably 15 hours, even more preferably 20 hours of working time.

8. The use of a chemically cross-linked adhesive composition, wherein the adhesive composition comprises castor oil or a derivative thereof, cross-linked using 1,6 hexamethylene diisocyanate (HMDI) in a weight ratio weight ratio castor oil : HMDI from 78 : 22 to 90 : 10 for the removal of hair, dirt and fluff from fabric surfaces.

## Patentansprüche

1. Verfahren zum Behandeln von Stoffen, umfassend die Schritte:
(a) Inkontaktbringen der Oberfläche des Stoffes mit einer chemisch vernetzten Klebstoffzusammensetzung, wobei die Klebstoffzusammensetzung Rizinusöl umfasst, das unter Verwendung mindestens eines Isocyanatvernetzungsmittels vernetzt ist, wobei das Gewichtsverhältnis von Rizinusöl zu Vernetzungsmittel von 78:22 bis 90:10 beträgt;
(b) Entfernen der Klebstoffzusammensetzung von der Oberfläche des Textils.

2. Verfahren zum Behandeln von Stoffen nach Anspruch 1, wobei das Gewichtsverhältnis von Rizinusöl zu Vernetzungsmittel von 80:20 bis 88:12 beträgt.

3. Verfahren zum Behandeln von Stoffen nach einem der vorstehenden Ansprüche, wobei das Vernetzungsmittel ausgewählt ist aus der Gruppe bestehend aus: 1, 4-Butandiisocyanat (BDI), 1,6-Hexamethylendiisocyanat (HMDI), L-Lysinethylesterdiisocyanat (LDI), 4,4'-Methylenbis(cyclohexylisocyanat) (H12MDI), Glycolid-Ethylenglycol-Glycolidisocyanat (Bezwada, LLC), 4,4'-Methylenbis-(phenylisocyanat) (MDI), 2,4'-Methylenbis(phenylisocyanat) (MDI), 2,2'-Methylen-bis(phenylisocyanat) (MDI), Isophorondiisocyanat (IPDI), 2,4-Toluol-Diisocyanat (2,4-TDI), 2,6-Toluol-Diisocyanat (2,6-TDI), Poly(hexamethylendiisocyanat) (PDI), 1,3-bis(2-Isocyanatopropan-2-yl)benzol, Poly(pentamethylendiisocyanat) und Mischungen davon, vorzugsweise 1,6-Hexamethylendiisocyanat (HMDI), L-Lysinethylesterdiisocyanat (LDI), Poly(pentamethylendiisocyanat), Poly(hexamethylendiisocyanat) (PDI), 1, 3,5-tris(5-Isocyanatopentyl)-1,3,5-triazin-2,4,6(1H,3H,5H)-trion, und Mischungen davon, mehr bevorzugt 1,6-Hexamethylendiisocyanat (HMDI).

4. Verfahren zum Behandeln von Stoffen nach einem der vorstehenden Ansprüche, wobei die Klebstoffzusammensetzung zu weniger als 0,5 Gew.-%, vorzugsweise zu weniger als 0,4 Gew.-%, noch mehr bevorzugt zu weniger als 0,3 Gew.-% Harnstoff, bezogen auf das Gesamtgewicht der Klebstoffzusammensetzung, aufweist.

5. Verfahren zum Behandeln von Stoffen nach einem der vorstehenden Ansprüche, wobei die Klebstoffzusammensetzung eine Ölmigration von weniger als 2 % gemäß der hierin beschriebenen Ölmigrationsmethode aufweist.

6. Verfahren zum Behandeln von Stoffen nach einem der vorstehenden Ansprüche, wobei die Klebstoffzusammensetzung zu weniger als 2,5 mg Feststoffrückstände, vorzugsweise zu weniger als 2,0 mg, noch mehr bevorzugt zu weniger als 1,5 mg gemäß hierin beschriebenem Feststoffrückständeverfahren aufweist.

7. Verfahren zum Behandeln von Stoffen nach einem der vorstehenden Ansprüche, wobei die Klebstoffzusammensetzung mindestens 10 Stunden, vorzugsweise 15 Stunden, noch mehr bevorzugt 20 Stunden Arbeitszeit aufweist.

8. Verwendung einer chemisch vernetzten Klebstoffzusammensetzung, wobei die Klebstoffzusammensetzung Rizinusöl oder ein Derivat davon umfasst, vernetzt unter Verwendung von 1,6 Hexamethylendiisocyanat (HMDI) in einem Gewichtsverhältnis von Gewichtsverhältnis Rizinusöl:HMDI von 78:22 bis 90:10 zum Entfernen von Haaren, Schmutz und Flusen von Stoffoberflächen.

## Revendications

1. Procédé de traitement de tissus comprenant les étapes consistant à :
(a) mettre en contact la surface du tissu avec une composition adhésive chimiquement réticulée, dans lequel la composition adhésive comprend de l'huile de ricin, réticulée en utilisant au moins un agent de réticulation isocyanate, dans lequel le rapport pondéral de l'huile de ricin à l'agent de réticulation va de 78:22 à 90:10 ;
(b) éliminer la composition adhésive de la surface du textile.

2. Procédé de traitement de tissus selon la revendication 1, dans lequel le rapport pondéral de l'huile de ricin à l'agent de réticulation va de 80:20 à 88:12.

3. Procédé de traitement de tissus selon une quelconque revendication précédente, dans lequel l'agent de réticulation est choisi dans le groupe constitué de : diisocyanate de 1,4-butane (BDI), diisocyanate de 1,6-hexaméthylène (HMDI), diisocyanate d'ester éthylique de L-lysine (LDI), 4,4'-méthylènebis(isocyanate de cyclohexyle) (H12MDI), diisocyanate de glycolide-éthylène glycol-glycolide (Bezwada, LLC), 4,4'-méthylènebis(isocyanate de phényle) (MDI), 2,4'-méthylènebis(isocyanate de phényle) (MDI), 2,2'-méthylènebis(isocyanate de phényle) (MDI), diisocyanate d'isophorone (IPDI), diisocyanate de 2,4-toluène (2,4-TDI), diisocyanate de 2,6-toluène (2,6-TDI), poly(diisocyanate d'hexaméthylène) (PDI), 1,3-bis(2-isocyanatopropan-2-yl)benzène, poly(diisocyanate de pentaméthylène) et mélanges de ceux-ci, de préférence diisocyanate de 1,6-hexaméthylène (HMDI), diisocyanate d'ester éthylique de L-lysine (LDI), poly(diisocyanate de pentaméthylène), poly(diisocyanate d'hexaméthylène) (PDI), 1, 3,5-tris(5-isocyanatopentyl)-1,3,5-triazine-2,4,6(1H,3H,5H)-trione, et mélanges de ceux-ci, plus préférablement diisocyanate de 1,6-hexaméthylène (HMDI).

4. Procédé de traitement de tissus selon de quelconques revendications précédentes, dans lequel la composition adhésive a moins de 0,5 % en poids, de préférence moins de 0,4 % en poids, même plus préférablement en dessous de 0,3 % en poids d'urée sur la base du poids total de composition adhésive.

5. Procédé de traitement de tissus selon de quelconques revendications précédentes, dans lequel la composition adhésive a une migration d'huile inférieure à 2 % selon le procédé de migration d'huile décrit ici.

6. Procédé de traitement de tissus selon de quelconques revendications précédentes, dans lequel la composition adhésive a moins de 2,5 mg de résidus solides, de préférence moins de 2,0 mg, même plus préférablement moins de 1,5 mg, selon le procédé de résidus solides décrit ici.

7. Procédé de traitement de tissus selon de quelconques revendications précédentes, dans lequel la composition adhésive a au moins 10 heures, de préférence 15 heures, même plus préférablement 20 heures de temps de travail.

8. Utilisation d'une composition adhésive chimiquement réticulée, dans laquelle la composition adhésive comprend de l'huile de ricin ou un dérivé de celle-ci, réticulée en utilisant du diisocyanate de 1,6-hexaméthylène (HMDI) dans un rapport pondéral huile de ricin : HMDI allant de 78:22 à 90:10 pour l'élimination de poils, de saleté et de peluches de surfaces textiles.
